(19) Europäisches Patentamt
European Patent Office
Office européen des brevets

(11) **EP 4 610 409 A1**

(12) **EUROPEAN PATENT APPLICATION**
published in accordance with Art. 153(4) EPC

(43) Date of publication:
**03.09.2025 Bulletin 2025/36**

(21) Application number: 23882772.9

(22) Date of filing: **27.10.2023**

(51) International Patent Classification (IPC):
*C25D 5/50* (2006.01)   *C25D 3/12* (2006.01)
*C25D 5/26* (2006.01)   *C25D 7/00* (2006.01)
*H01M 50/119* (2021.01)   *H01M 50/124* (2021.01)
*H01M 50/133* (2021.01)

(52) Cooperative Patent Classification (CPC):
**C25D 3/12; C25D 5/36; C25D 5/50; C25D 7/00;
H01M 50/119; H01M 50/124; H01M 50/133**

(86) International application number:
**PCT/JP2023/038958**

(87) International publication number:
**WO 2024/090570 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.10.2022 JP 2022173719
31.03.2023 JP 2023059384**

(71) Applicant: **Toyo Kohan Co., Ltd.
Tokyo 141-8260 (JP)**

(72) Inventors:
• **HASHIMOTO, Yusuke
Kudamatsu-shi, Yamaguchi 744-8611 (JP)**

• **UEHARA, Kaori
Kudamatsu-shi, Yamaguchi 744-8611 (JP)**
• **WATANABE, Takahiro
Kudamatsu-shi, Yamaguchi 744-8611 (JP)**
• **HORIE, Shinichirou
Kudamatsu-shi, Yamaguchi 744-8611 (JP)**
• **MATSUSHIGE, Daisuke
Kudamatsu-shi, Yamaguchi 744-8611 (JP)**
• **TSUTSUMI, Etsuro
Kudamatsu-shi, Yamaguchi 744-8611 (JP)**
• **IDE, Yasunori
Kudamatsu-shi, Yamaguchi 744-8611 (JP)**

(74) Representative: **Kraus & Lederer PartGmbB
Thomas-Wimmer-Ring 15
80539 München (DE)**

(54) **NI-PLATED STEEL SHEET AND BATTERY CONTAINER**

(57)    Provided is a Ni-plated steel sheet comprising a steel sheet, and an Fe-Ni diffusion layer formed on at least one surface of the steel sheet, wherein as determined by EBSD measurement performed on the topmost surface of the Ni-plated steel sheet, the average crystal grain size is 0.32 µm or more, and the proportion of the region which can be indexed as Fe is 0.0% or more and 6.0% or less.

Fig. 1

Ni-plated steel sheet

Fe-Ni diffusion layer

steel sheet

**EP 4 610 409 A1**

**Description**

TECHNICAL FIELD

The present invention relates to a Ni-plated steel sheet and a battery container.

BACKGROUND ART

Traditionally, Ni-plated steel sheets have been widely used as materials for battery containers. Patent Document 1 discloses a Ni-plated steel sheet for a battery container including an iron-nickel diffusion layer for preventing pitting corrosion and solution leakage, the iron-nickel diffusion layer being formed by forming a nickel-plating layer on a steel sheet and then performing a thermal diffusion treatment, wherein the ratio of Ni to Fe in the outermost layer is controlled.

RELATED ART DOCUMENT

PATENT DOCUMENT

Patent Document 1: JP 2014-47359 A

SUMMARY OF THE INVENTION

PROBLEM TO BE SOLVED BY THE INVENTION

However, as battery capacity increases, a battery container formed from the Ni-plated steel sheet disclosed in Patent Document 1 causes a problem that when abnormality occurs in a battery management system or overdischarge occurs in an aging step in the production of batteries, the potential of the Fe-Ni diffusion layer becomes close to the positive electrode potential so that iron may be eluted from the Fe-Ni diffusion layer into the electrolyte solution, resulting in corrosion of the inner wall of the battery container. As battery capacity increases, the positive electrode potential tends to become higher, which leads to a demand for a Ni-plated steel sheet including an Fe-Ni diffusion layer having higher electrolyte solution resistance during overdischarge.
An object of the present invention is to provide a Ni-plated steel sheet having high electrolyte solution resistance during overdischarge.

MEANS FOR SOLVING PROBLEMS

The present inventors, who have conducted extensive research to achieve the above object, have found that the above object can be achieved in a Ni-plated steel sheet including a steel sheet and an Fe-Ni diffusion layer formed on at least one surface of the steel sheet, by properly controlling the average crystal grain size and the proportion of the region which can be indexed as Fe, both of which can be determined by EBSD measurement, and have completed the present invention.

[1] Specifically, a first mode according to the present invention provides a Ni-plated steel sheet comprising a steel sheet, and an Fe-Ni diffusion layer formed on at least one surface of the steel sheet, wherein as determined by EBSD measurement performed on the topmost surface of the Ni-plated steel sheet, the average crystal grain size is 0.32 $\mu$m or more, and the proportion of the region which can be indexed as Fe is 0.0% or more and 6.0% or less.
[2] A second mode according to the present invention provides the Ni-plated steel sheet according to mode 1, wherein the amount of Ni deposited per one surface of the Ni-plated steel sheet is 0.8 to 8.9 g/m$^2$.
[3] A third mode according to the present invention provides the Ni-plated steel sheet according to mode 1 or 2, comprising a Ni layer formed on the Fe-Ni diffusion layer, wherein as determined by EBSD measurement performed on the topmost surface of the Ni-plated steel sheet, the proportion of the region which can be indexed as Fe is 0.0% or more and 1.0% or less.
[4] A fourth mode according to the present invention provides a Ni-plated steel sheet according to any one of modes 1 to 3, wherein the steel sheet has a thickness of 0.03 to 1.5 mm.
[5] A fifth mode according to the present invention provides a Ni-plated steel sheet according to any one of modes 1 to 4, wherein the steel sheet is low carbon steel or ultra-low carbon steel.
[6] A sixth mode according to the present invention provides a battery container using the Ni-plated steel sheet according to any one of modes 1 to 5.

EFFECTS OF THE INVENTION

The present invention provides a Ni-plated steel sheet which allows a suppression in elution of iron (Fe) into an electrolyte solution during overdischarge and has high electrolyte solution resistance.

BRIEF DESCRIPTION OF DRAWINGS

Fig. 1 is a schematic cross-sectional view showing the configuration of a Ni-plated steel sheet according to the present embodiment of the present invention.
Fig. 2 is a phase map obtained by EBSD measurement performed on a Ni-plated steel sheet obtained in Example 7.
Fig. 3 is an example of a chart obtained by radio frequency glow discharge optical emission spectrometry performed on a standard sample.
Fig. 4 is another example of a chart obtained by radio frequency glow discharge optical emission spectrometry performed on a standard sample.
Fig. 5 is an example of a temperature profile of a plated steel sheet for describing a method of calculating a thermal history Y in a thermal diffusion treatment.
Fig. 6 is a schematic cross-sectional view showing a modification of a Ni-plated steel sheet according to an embodiment of the present invention.
Fig. 7 is a schematic view illustrating a measurement jig used in evaluation of the electrolyte solution resistance of a Ni-plated steel sheet by an LSV method.

DESCRIPTION OF EMBODIMENTS

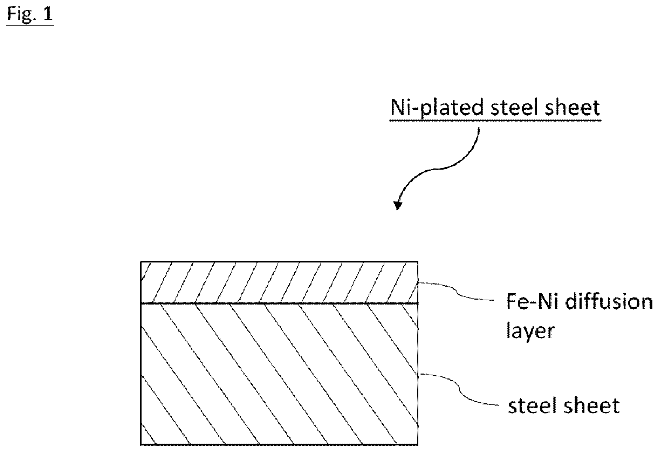

Fig. 1 is a schematic cross-sectional view showing the configuration of a Ni-plated steel sheet according to the present embodiment. As shown in Fig. 1, the Ni-plated steel sheet according to the present embodiment includes a steel sheet, and an Fe-Ni diffusion layer formed on at least one surface of the steel sheet.

The steel sheet according to the present embodiment can be any steel sheet as long as it has high formability, and is not particularly limited. For example, low carbon steel such as low carbon aluminum-killed steel (carbon content: 0.01 to 0.15% by weight), ultra-low carbon steel having a carbon content of less than 0.01% by weight, or non-aging ultra-low carbon steel formed by adding Ti or Nb to ultra-low carbon steel can be used. In the present embodiment, the followings can also be used: those obtained by pickling hot-rolled plates of these steels above to remove scale (oxidized film) on the surfaces thereof, and cold rolling the plates, followed by electrolytic cleaning such as alkaline electrolytic degreasing, annealing and/or temper rolling, those obtained by subjecting hot-rolled plates of these steels above to the cold rolling, electrolytic cleaning without performing either annealing or temper rolling, and the like. From the viewpoint of productivity, a continuous steel strip is preferably used as the steel sheet.

The thickness of the steel sheet can be appropriately selected according to the application of the Ni-plated steel sheet, and is not particularly limited. To reduce production costs, the thickness is preferably 1.5 mm or less, more preferably 1.25 mm or less, still more preferably 0.9 mm or less. To improve the mechanical properties of the Ni-plated steel sheet, the thickness of the steel sheet is preferably 0.03 mm or more, more preferably 0.1 mm or more, still more preferably 0.15 mm or more, particularly preferably 0.2 mm or more.

The Ni-plated steel sheet according to the present embodiment includes an Fe-Ni diffusion layer on the steel sheet. The Fe-Ni diffusion layer is a layer formed by forming a Ni-plating layer on the steel sheet, and then performing a thermal diffusion treatment on the steel sheet including the Ni-plating layer formed thereon to cause thermal diffusion of iron (Fe) contained in the steel sheet and nickel (Ni) contained in the Ni-plating layer. It is sufficient that the Fe-Ni diffusion layer is formed on at least one surface of the steel sheet. The Fe-Ni diffusion layer may be formed on both of the surfaces of the steel sheet.

In the Ni-plated steel sheet according to the present embodiment, as determined by Electron BackScatter Diffraction Pattern (EBSD) measurement performed on the topmost surface of the Ni-plated steel sheet, the average crystal grain size is 0.32 $\mu$m or more, and the proportion of the region which can be indexed as Fe is 0.0% or more and 6.0% or less. In the Ni-plated steel sheet shown in Fig. 1, since an Fe-Ni diffusion layer is formed on the topmost surface, the average crystal grain size and the proportion of the region which can be indexed as Fe on the surface of the Fe-Ni diffusion layer, both of which can be determined by EBSD measurement, are controlled within the above ranges. Since the Ni-plated steel sheet according to the present embodiment has the properties as described above, prevention of elution of iron into an electrolyte solution and high electrolyte solution resistance during overdischarge are achieved. In the present invention, the region which can be indexed as Fe refers to a region which can be indexed using material data of Fe($\alpha$) in an EBSD pattern obtained by EBSD measurement.

The average crystal grain size on the topmost surface of the Ni-plated steel sheet can be determined as follows. Specifically, EBSD measurement is performed on the topmost surface of the Ni-plated steel sheet, indexing is performed in the EBSD pattern using two pieces of material data of Fe($\alpha$) and Ni, and mapping data including phase and orientation information about Fe($\alpha$) and Ni is obtained in each of the different measurement areas. The resulting mapping data is analyzed by the number method using analysis software to give the average crystal grain size. Examples of the analysis software include OIM Analysis Version 7.3.

The average crystal grain size on the topmost surface of the Ni-plated steel sheet is 0.32 $\mu$m or more, preferably 0.36 $\mu$m or more, more preferably 0.5 $\mu$m or more. When the average crystal grain size on the topmost surface of the Ni-plated steel sheet is too small, there are a large number of paths through which an electrolyte solution enters the interior of the Ni-plated steel sheet, which may result in reduced electrolyte solution resistance of the Ni-plated steel sheet. The upper limit of the average crystal grain size on the topmost surface of the Fe-Ni diffusion layer is usually 4.0 $\mu$m or less, preferably 1.0 $\mu$m or less, although not particularly limited thereto.

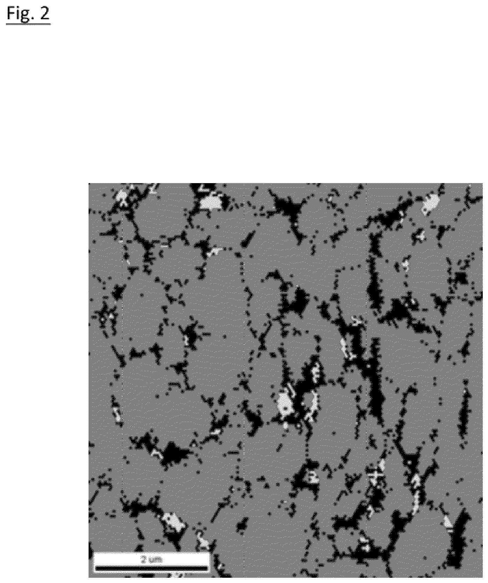

The region which can be indexed as Fe determined by EBSD measurement refers to a region which can be indexed using material data of Fe($\alpha$), that is, a region determined to have a structure similar to the crystal structure of Fe($\alpha$). Fig. 2 is a phase map obtained by EBSD measurement performed on a Ni-plated steel sheet obtained in Example 7. The region which can be indexed as Fe is the region shown in white in Fig. 2. In Fig. 2, the region shown in grey is a region which can be indexed using the material data of Ni (hereinafter, referred to as a region which can be indexed as Ni), that is, a region which is determined to have a structure similar to the crystal structure of Ni, and the region shown in black is a region deleted by clean-up processing and setting of a lower limit of the CI value (described later) that are performed in the analysis of the results obtained in EBSD.

The proportion of the region which can be indexed as Fe (hereinafter, also referred to as Fe indexing proportion) as determined by EBSD measurement, can be determined as follows. First, EBSD measurement is performed on a Ni-plated steel sheet to obtain mapping data in the same manner as in the calculation of the average crystal grain size as described above. Then, a phase map in which Fe and Ni are discriminated by different colors (indexed) is produced using analysis software. The proportion of the area of the region which can be indexed as Fe to the total area of the regions which can be indexed as Fe or Ni in the phase map (where the regions eliminated by clean-up processing and setting the lower limit of the CI value, for example, are not included) can be obtained as a Fe indexing proportion according to the present embodiment. The Fe indexing proportion can be obtained as a value of Partition Fraction of Fe by analysis software, but the procedure is not particularly limited thereto. Further, the proportion which can be indexed as Ni (hereinafter, also referred to as a Ni indexing proportion) can be described in the same manner as in the Fe indexing proportion, and can be obtained as a value of Partition Fraction of Ni by analysis software.

The Fe indexing proportion on the topmost surface of the Ni-plated steel sheet is 6.0% or less, preferably 5.0% or less, more preferably 3.0% or less, particularly preferably 1.0% or less. When the Fe indexing proportion is too large, a large amount of Fe is eluted from the topmost surface, which may result in reduced electrolyte solution resistance of the Ni-plated steel sheet. The lower limit of the Fe indexing proportion on the topmost surface of the Ni-plated steel sheet is not particularly limited, and is usually 0.0% or more because the region which can be indexed as Fe is not necessarily formed on the topmost surface.

The Ni indexing proportion on the topmost surface of the Ni-plated steel sheet is preferably 94% or more, more preferably 95% or more, still more preferably 97% or more, particularly preferably 99% or more, although not particularly limited thereto.

Since the penetration depth to a sample in EBSD measurement is several tens nanometers, which is very shallow, the crystalline state at a portion closer to the surface (the outermost surface) of the sample can be measured. In the Ni-plated steel sheet according to the present embodiment, the proportion of the region which can be indexed as Fe is 0.0% or more and 6.0% or less as determined by EBSD measurement, that is, the state of the Fe-Ni alloy on the topmost surface is properly controlled. Thus, high electrolyte solution resistance during overdischarge and prevention of corrosion caused by elution of iron can be achieved.

The analysis preferably includes clean-up processing (Grain CI standardization) using analysis software, and evaluation using data at measurement points where a Confidence Index (CI value) exceeds 0.1. The CI value is an index of confidence about indexing and results of calculation of orientations in the EBSD method. In measurement points having a CI value of higher than 0.1, it is confirmed that the accuracy of indexing and calculation of orientations is more than 95%. The calculation of the average crystal grain size by a Number method can be performed on all Fe and Ni data for which the above cleaning-up processing have been carried out under the following conditions: Grain Tolerance: 5, and Minimum Grain: 2. In the analysis, twin crystals can be considered as other crystal grains and analyzed using default settings instead of using special settings. In the EBSD measurement, it may be difficult to properly detect the pattern in the area where temper rolling after a heat treatment can cause local strain by forming, depressions and projections, and the like. Thus, it is preferred that the average CI value of the mapping data obtained under the measurement conditions above be not too low. Specifically, the average CI value is preferably 0.04 or more.

In the present embodiment, in addition to the average crystal grain size and the Fe indexing proportion measured by EBSD measurement, the Fe proportion on the topmost surface of the Fe-Ni diffusion layer and the thickness of the Fe-Ni diffusion layer measured using a radio frequency glow discharge optical emission spectrometry (GDS) analyzer are preferably within specific ranges. The Fe proportion on the topmost surface of the Fe-Ni diffusion layer and the thickness of the Fe-Ni diffusion layer can be determined by continuously measuring the Fe intensity and the Ni intensity of the Ni-plated steel sheet in the depth direction from the topmost surface to the steel sheet.

From the viewpoint of favorable welding properties, the proportion of Fe (% by mass) on the topmost surface of the Fe-Ni diffusion layer measured by GDS (hereinafter, also referred to as Fe proportion by GDS) is preferably more than 10%, more preferably 20% or more, still more preferably 25% or more, particularly preferably 30% or more. From the viewpoint of rust resistance during storage until the battery is assembled using the Ni-plated steel sheet, the proportion of Fe on the topmost surface of the Fe-Ni diffusion layer is preferably 75% or less, more preferably 72% or less, still more preferably 70% or less, particularly preferably 65% or less.

In the Ni-plated steel sheet according to the present embodiment, the Fe indexing proportion as determined by EBSD measurement and the Fe proportion as determined by GDS are totally different parameters. Specifically, the Fe indexing proportion by EBSD measurement, in which attention is focused on the crystal structure on the topmost surface of the Ni-plated steel sheet, represents the proportion of a structure similar to the crystal structure of Fe to Ni or a structure similar to the crystal structure of Ni present on the topmost surface. On the other hand, the Fe proportion by GDS only represents the proportion (by mass) of the Fe atom present on the surface, and does not reflect the information about the state of the atoms present on the surface when both of Fe and Ni are present on the surface. The present inventors, who have conducted extensive research to improve the electrolyte solution resistance of the Ni-plated steel sheet, have realized that even when the proportion of the Fe atom present on the surface as determined by GDS remains steady, electrolyte solution resistance during overdischarge can vary, and have found that the electrolyte solution resistance during overdischarge can be controlled by the Fe indexing proportion as determined by EBSD measurement. That is, the present inventors have found that what is important is not the simple proportion of the Fe atom present, but control of the state of the alloy of Fe and Ni, and that even when Fe atom is present on the surface, the electrolyte solution resistance during overdischarge can be improved by preventing the crystal structure of the alloy on the topmost surface from being similar to that of Fe such that the Fe indexing proportion as determined by EBSD measurement is 0.0% or more and 6.0% or less.

From the viewpoint of production cost, the Fe-Ni diffusion layer has a thickness of preferably 4.0 $\mu$m or less, more preferably 3.0 $\mu$m or less, still more preferably 2.5 $\mu$m or less, particularly preferably 2.0 $\mu$m or less. To improve the electrolyte solution resistance during overdischarge, the thickness of the Fe-Ni diffusion layer is preferably 0.36 $\mu$m or more, more preferably 0.45 $\mu$m or more, still more preferably 0.6 $\mu$m or more, particularly preferably 0.7 $\mu$m or more.

Specifically, the Fe proportion on the topmost surface of the Fe-Ni diffusion layer and the thickness of the Fe-Ni diffusion layer can be determined by the following steps.

Measurement step 1: A standard sample is measured by radio frequency glow discharge optical emission spectrometry to obtain intensity data for each etching time, and the saturated value of the Fe intensity, the maximum value of the Ni intensity, and the etching rate of Ni are determined. When the saturated value of the Fe intensity and the maximum value of the Ni intensity are not the same numeric value in the measurement data of the standard sample thus obtained, the correction coefficients for Fe and Ni to give the saturated value of the Fe intensity and the maximum value of the Ni intensity having the same numeric value (e.g., 10) are determined, and all of the values of intensity data are corrected.

Measurement step 2: A target test piece of the Ni-plated steel sheet is analyzed under the same analysis conditions as those in Measurement step 1 to obtain intensity data for each etching time. When the correction coefficients are used in Measurement step 1, the values of the data of the target test piece are likewise corrected by the correction coefficients, and the subsequent steps are performed using the resulting intensity data.

Measurement step 3: In the data obtained in Measurement step 2, the Fe proportion and the Ni proportion are determined at each measurement point from the following equations:

$$\text{Fe proportion} = \text{Fe intensity}/(\text{Fe intensity} + \text{Ni intensity})$$

$$\text{Ni proportion} = \text{Ni intensity}/(\text{Fe intensity} + \text{Ni intensity})$$

Measurement step 4: In the chart obtained from the data obtained in Measurement step 3, a point at which the Fe proportion initially has a minimum value is defined as the topmost surface.

Measurement step 5: The topmost surface defined in Measurement step 4 is defined as a start point, and a point at which the Ni intensity in the data reaches 10% of the maximum value of the Ni intensity of the standard sample is defined as an interface point to determine the difference in etching time between the start point and the interface point. The difference in etching time is multiplied by the etching rate to determine the etching depth. The determined etching depth is the thickness of the Fe-Ni diffusion layer. The interface point indicates the interface between the Fe-Ni diffusion layer and the steel sheet.

Measurement step 6: The Fe proportion on the topmost surface defined in Measurement step 4 is the Fe proportion on the surface of the Fe-Ni diffusion layer.

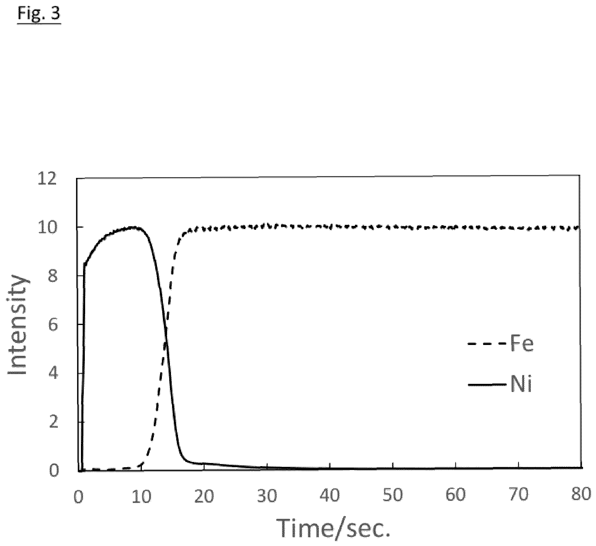

Measurement step 1 will be described. In Measurement step 1, a standard sample is measured by radio frequency glow discharge optical emission spectrometry to obtain the intensity data for each etching time, and the saturated value of the Fe intensity, the maximum value of the Ni intensity, and the etching rate of Ni are verified. Initially, a standard sample including a Ni-plated steel sheet having a known thickness (or the deposited amount) of the plating layer and not subjected to a heat treatment is prepared. For example, a standard Ni-plated steel sheet of a low carbon steel plate having a thickness of 0.3 mm on which non-glossy Ni plating with a thickness of 1.1 $\mu$m is formed is prepared. Using this standard sample, the Fe intensity and the Ni intensity in the standard Ni-plated steel sheet are measured with a radio frequency glow discharge optical emission spectrometer until the Fe intensity becomes saturated. When the Fe intensity and the Ni intensity are obtained, the chart as shown in Fig. 3 can be obtained. Fig. 3 is an example of a chart obtained by radio frequency glow discharge optical emission spectrometry performed on the standard sample. In Fig. 3, the ordinate represents the Fe intensity and the Ni intensity, and the abscissa represents the measurement time when the surface (surface on which Ni plating is formed) of the standard Ni-plated steel sheet is measured in the depth direction with a radio frequency glow discharge optical emission spectrometer.

From the obtained chart, the saturated value of the Fe intensity is determined. The saturated value of the Fe intensity can be determined from the change in Fe intensity per second, that is, the rate of change in the Fe intensity with respect to time (change in Fe intensity/sec). The rate of change in the Fe intensity with respect to time sharply increases when Fe is detected after the start of measurement, and decreases after the intensity reaches the maximum value, and then is steady near zero. The value of the Fe intensity when the rate of change in the Fe intensity with respect to time remains steady near zero is the saturated value of the Fe intensity. Specifically, the Fe intensity when the rate of change in the Fe intensity with respect to time is 0.02 or less is defined as the saturated value of the Fe intensity.

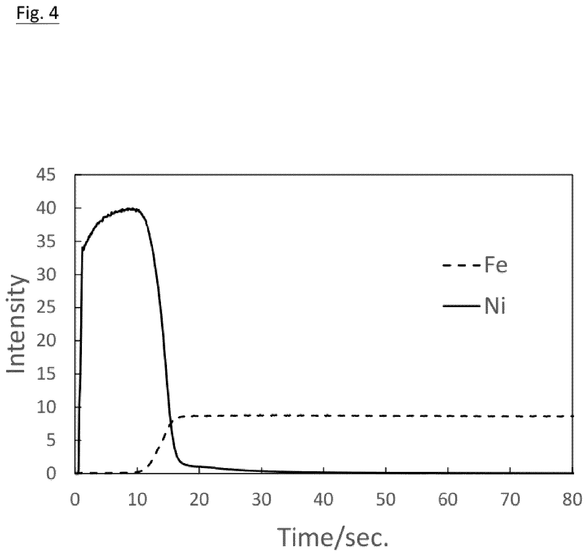

Next, the maximum value of the Ni intensity is determined. For example, in Fig. 3, the value of 10 in the Ni intensity at a measurement time of 9.9 seconds is the maximum value of the Ni intensity. Depending on the measurement conditions of GDS, the saturated value of the Fe intensity and the maximum value of the Ni intensity are not the same value as shown in Fig. 4. In this case, correction coefficients to be used to correct the Fe intensity and the Ni intensity are determined, respectively, so that the saturated value of the Fe intensity and the maximum value of the Ni intensity are the same value, and the subsequent steps are performed. For example, in the case of Fig. 3, where the saturated value of the Fe intensity is 10 as a reference, a correction coefficient to be used to correct the Ni intensity is determined so that the maximum value of the Ni intensity after correction is 10. Fig. 4 is another example of the chart obtained by radio frequency glow discharge optical emission spectrometry performed on the standard sample.

Next, the etching rate of Ni is determined. The etching rate can be determined based on the thickness of Ni plating and the etching time. Since Ni is considered to be present to a point at which the Ni intensity reaches 10% of the maximum value of the Ni intensity in the GDS analysis, the time from the start of measurement to a point at which the Ni intensity of the standard sample reaches 10% of the maximum value of the Ni intensity is defined as the etching time. For example, in the case of Fig. 3, the etching rate can be determined by dividing the thickness of the Ni plating of 1.1 $\mu$m by the time from the start of measurement to the point at which the Ni intensity reaches 10% of the maximum value of the Ni intensity. Since the etching rate of Ni and that of Fe are approximately equal, the thickness of the Fe-Ni diffusion layer is calculated using the etching rate of Ni determined as above in the present invention.

Measurement step 2 will be described. In Measurement step 2, the Ni-plated steel sheet according to the present embodiment is analyzed by GDS. The Ni-plated steel sheet according to the present embodiment as a target test piece is measured with GDS under the same conditions as those in step 1 above to obtain the Fe intensity and the Ni intensity in the Ni-plated steel sheet. When the correction coefficient is used in Measurement step 1, the data of the target test piece is also corrected using the same correction coefficient as that used for the standard sample, and using the obtained intensity data, the subsequent steps are performed. Since Fe diffuses to the surface in the present embodiment, intensity data is obtained, in which the Fe intensity on the surface is never 0.

In the present embodiment, whether the surface of the Ni-plated steel sheet is the Fe-Ni diffusion layer or not can be determined based on whether the Fe intensity on the surface of the Ni-plated steel sheet exceeds 10% of the saturated value of the Fe intensity. When the Fe intensity of the topmost surface exceeds 10%, it can be determined that the surface is the Fe-Ni diffusion layer. Conversely, when the Fe intensity thereof does not exceed 10%, it is determined that a Ni layer is present on the Fe-Ni diffusion layer.

Measurement step 3 will be described. In Measurement step 3, the Fe proportion and the Ni proportion in each depth position of the Fe-Ni diffusion layer are determined. In the data obtained in Measurement step 2, the percentages of the numeric values of the intensities of Fe and Ni (numeric values of the intensities after correction when the correction coefficients are used) are calculated. Thereby, the Fe proportion in each time, that is, in each depth position can be determined. Namely, the Fe proportion and the Ni proportion are determined from the following equations:

$$\text{Fe proportion = Fe intensity/(Fe intensity + Ni intensity)} \times 100$$

$$\text{Ni proportion = Ni intensity/(Fe intensity + Ni intensity)} \times 100$$

Measurement step 4 will be described. In Measurement step 4, the depth position of the topmost surface of the Fe-Ni diffusion layer is defined. Since a signal containing noises may appear at the start of etching due to influences over the radio frequency glow discharge optical emission spectrometer caused by dirt on the surface, to accurately determine the Fe proportion of the topmost surface, a point at which the Fe proportion has the minimum value (depth position) is defined as the topmost surface of the Fe-Ni diffusion layer. The minimum value of the Fe proportion appears in the measurement time from 0 seconds to 5 seconds under usual measurement conditions.

Measurement step 5 will be described. In Measurement step 5, the thickness of the Fe-Ni diffusion layer is determined by determining the etching depth from the topmost surface to the boundary between the Fe-Ni diffusion layer and the steel sheet. The position of the topmost surface is the position defined in Measurement step 4. The boundary between the Fe-Ni diffusion layer and the steel sheet is a point (depth position) at which the Ni intensity of the target sample reaches 10% of the maximum value of the Ni intensity of the standard sample. In other words, when the maximum value of the Ni intensity of the standard sample in Step 1 is 10, a point at which the Ni intensity of the target sample determined in Step 2 is 1 is the boundary between the Fe-Ni diffusion layer and the steel sheet. To be noted, the point at which the Ni intensity is 1 is naturally a position deeper than the topmost surface, and thus, a point at which the Ni intensity is 1 at a rise of the initial period of measurement (depth position shallower than the depth position at which the Ni intensity is the maximum) is excluded. Next, the difference between the etching time from a depth position of 0 (i.e., measurement time: 0) to the topmost surface and the etching time from a depth position of 0 to the boundary between the Fe-Ni diffusion layer and the steel sheet are determined, and the difference is multiplied by the etching rate determined in Measurement step 1 to determine the thickness of the Fe-Ni diffusion layer.

Thus, utilizing the numeric values indicating the relation between the depth time determined by measurement of the steel sheet including the Ni-plating layer formed thereon having a known Ni plating thickness and not subjected to a thermal diffusion treatment using a radio frequency glow discharge optical emission spectrometer (measurement time with a radio frequency glow discharge optical emission spectrometer) and the actual thickness, the thickness of the Fe-Ni diffusion layer in the Ni-plated steel sheet according to the present embodiment can be determined. The actual Ni plating thickness before a heat treatment can be determined by measuring the thickness in the steel sheet including the Ni-plating layer formed thereon by cross-sectional observation using SEM or calculating the thickness from the amount of Ni deposited, which is determined by X-ray fluorescence analysis, using the specific gravity of Ni.

Measurement step 6 will be described. In Measurement step 6, the Fe proportion on the topmost surface of the Fe-Ni diffusion layer is determined. The Fe proportion on the topmost surface of the Fe-Ni diffusion layer can be determined as the Fe proportion at a depth position of the topmost surface determined in Measurement step 4.

To control the average crystal grain size and the Fe indexing proportion, which can be determined by EBSD measurement, within appropriate ranges, the lower limit of the amount of Ni deposited on one surface of the steel sheet is preferably 0.45 g/m$^2$ or more, more preferably 0.8 g/m$^2$ or more, still more preferably 2.5 g/m$^2$ or more, particularly preferably 3.0 g/m$^2$ or more. The upper limited of the amount of Ni deposited on one surface of the steel sheet is preferably 26.7 g/m$^2$ or less, more preferably 17.8 g/m$^2$ or less, still more preferably 8.9 g/m$^2$ or less, particularly preferably 7.2 g/m$^2$ or less; otherwise, Fe is difficult to diffuse to the topmost surface, and a higher heat treatment temperature or a longer heat treatment time is required to diffuse Fe sufficiently. The amount of Ni deposited can be determined by X-ray fluorescence measurement. In X-ray fluorescence measurement, quantification can be performed using a calibration curve. X-ray fluorescence measurement can be performed on a Ni-plated steel sheet on which an Fe-Ni diffusion layer is formed by a thermal diffusion treatment, or can be performed on a steel sheet which includes a Ni-plating layer formed thereon and is not subjected to a thermal diffusion treatment.

Although the Fe-Ni diffusion layer is formed on only one of surfaces of the steel sheet in the present embodiment as shown in Fig. 1, the Ni-plated steel sheet can have any other configuration, and it is sufficient that the Fe-Ni diffusion layer is formed on at least one of the topmost surfaces of the steel sheet. For example, the Fe-Ni diffusion layer may be formed on both of the topmost surfaces of the steel sheet. Alternatively, the Fe-Ni diffusion layer may be formed on both of the surfaces of the steel sheet, and a Ni layer may be formed on the Fe-Ni diffusion layer formed one of the surfaces. In particular, when the Ni-plated steel sheet according to the present embodiment is used in a battery container in the form of a can, preferably, the Fe-Ni diffusion layer having a controlled average crystal grain size and a controlled Fe indexing proportion is formed on the topmost surface which will form the inner surface of the battery container, and the Fe-Ni diffusion layer is formed on the surface which will form the outer surface of the battery container and a Ni layer is formed on the Fe-Ni diffusion layer. In this case, the total amount of Ni deposited contained in the Fe-Ni diffusion layer and the Ni layer on the surface which will form the outer surface of the battery container is preferably 9.0 to 90 g/m$^2$.

The Ni-plated steel sheet according to the present embodiment can be produced as follows.

Initially, a Ni-plating layer is formed on a steel sheet. Examples of a Ni plating bath used in formation of the Ni-plating layer include plating baths usually used, namely, a Watts bath, a sulfamic acid bath, a fluoroborate bath, a chloride bath, and the like. For example, the Ni-plating layer can be formed at a pH of 3.0 to 5.0, a bath temperature of 40 to 70°C, and a current density of 10 to 40 A/dm$^2$, using a Watts bath having a bath composition containing 200 to 350 g/L of nickel sulfate·hexahydrate, 20 to 60 g/L of nickel chloride ·hexahydrate, and 10 to 50 g/L of boric acid. It is sufficient that the Ni-plating layer is formed on at least one surface of the steel sheet.

The amount W of Ni deposited onto the steel sheet as a result of formation of the Ni-plating layer is not particularly limited as long as the Fe-Ni diffusion layer as the topmost surface of the Ni-plated steel sheet can be formed and the configuration can be controlled. If the amount W is too large, Fe is difficult to diffuse to the topmost surface, and a higher heat treatment temperature or a longer heat treatment time is required to diffuse Fe sufficiently, which may lead to difficulties in controlling the average crystal grain size and the proportion of the region which can be indexed as Fe within appropriate ranges. Thus, the amount W is preferably 26.7 g/m$^2$ or less, more preferably 17.8 g/m$^2$ or less, still more preferably 8.9 g/m$^2$ or less, particularly preferably 7.2 g/m$^2$ or less. On the other hand, if the amount W of Ni deposited is too small, the average crystal grain size and the Fe indexing proportion, which can be determined by EBSD measurement, may be difficult to control within appropriate ranges, and the electrolyte solution resistance during overdischarge may reduce. Thus, the amount of W of Ni deposited is preferably 0.45 g/m$^2$ or more, more preferably 0.8 g/m$^2$ or more, still more preferably 2.5 g/m$^2$ or more, particularly preferably 3.0 g/m$^2$ or more. When the Fe-Ni diffusion layer is formed on the topmost surfaces of both of the surfaces of the steel sheet, preferably, the amounts W of Ni deposited on the surfaces thereof are each controlled to fall within the above ranges. When the Ni-plated steel sheet according to the present embodiment is used in a battery container in the form of a can, preferably, the Fe-Ni diffusion layer is formed on the surface which will form the outer surface of the battery container, and a Ni layer is formed on the Fe-Ni diffusion layer. To make an outer surface of a battery container having such a configuration, the amount of Ni deposited on the surface which will form the outer surface of the battery container is preferably 9.0 to 90 g/m$^2$.

Next, the steel sheet including a Ni-plating layer formed thereon (hereinafter, referred to as plated steel sheet) is subjected to a thermal diffusion treatment to form an Fe-Ni diffusion layer. By properly controlling the conditions for the thermal diffusion treatment, the average crystal grain size and the Fe indexing proportion, which can be determined by EBSD measurement, can be controlled within appropriate ranges.

The method of performing the thermal diffusion treatment may be either a continuous annealing method or a batch annealing method, and is not particularly limited. In the thermal diffusion treatment, the heat treatment atmosphere is preferably a non-oxidizing atmosphere or a reducing protective gas atmosphere. When a reducing protective gas atmosphere is used, for example, a mixed gas of $H_2$ and $N_2$ called HNX gas is preferably used. In the present embodiment, the thermal diffusion treatment includes an initial heating step, a final heating step, and a cooling step.

The initial heating step is a step of heating the plated steel sheet from ambient temperature to the start temperature of the final heating step (final heating start temperature) described later. The heating rate in the initial heating step (hereinafter, also referred to as initial heating rate) is a rate obtained from calculation of the slope of the temperature profile of the plated steel sheet calculated in the initial heating step. That is, the initial heating rate can be calculated by dividing the difference in temperature between the start temperature of the initial heating step and the start temperature of the final heating step by the heating time taken. The initial heating rate is preferably higher than the heating rate in the final heating step described later. Specifically, the initial heating rate is preferably higher than 4°C/sec and 14°C/sec or lower.

The maximum rate of heating (hereinafter, also referred to as maximum heating rate) in the initial heating step is a rate obtained from calculation of the steepest slope of the temperature profile of the plated steel sheet in the initial heating step, that is, the temperature profile between ambient temperature and the start temperature of the final heating step, and is preferably 4°C/sec or higher. To properly control the average crystal grain size and the Fe indexing proportion within appropriate ranges, the maximum rate of heating in the initial heating step is preferably 14°C/sec or lower, more preferably 12°C/sec or lower, still more preferably 10°C/sec or lower. When the maximum heating rate is too large, it is expected that Fe diffuses before the crystal grans grow and easily reaches the topmost surface, and rapid change in crystal structure easily occurs, which results in increased Fe indexing proportion on the topmost surface of the Ni-plated steel sheet and decreased electrolyte solution resistance. In particular, to prevent the diffusion of Fe to the topmost surface, the maximum heating rate in the region of 450°C or higher in the temperature profile in the initial heating step is preferably 14°C/sec or lower, more preferably 12°C/sec or lower, still more preferably 10°C/sec or lower.

The final heating step is a step of heating from the final heating start temperature to the maximum temperature in the thermal diffusion treatment (hereinafter, referred to as goal temperature). The final heating start temperature is preferably 550°C or higher at which rapid diffusion of Ni in the Ni-plating layer and Fe in the steel sheet begins, more preferably 600°C or higher at which more rapid interdiffusion begins, still more preferably 650°C or higher. The final heating start temperature is preferably lower than 900°C, more preferably lower than 850°C. To properly control the average crystal grain size and the Fe indexing proportion within appropriate ranges, the goal temperature is preferably lower than 930°C, more preferably lower than 900°C, still more preferably lower than 870°C. The goal temperature can be determined based on the final heating start temperature such that the difference in temperature from the final heating start temperature is a specific difference in temperature as described later.

In the present embodiment, to improve the electrolyte solution resistance of the Ni-plated steel sheet during overdischarge, the heating rate in the final heating step (hereinafter, also referred to as final heating rate) is preferably 4°C/sec or lower, more preferably 3°C/sec or lower, still more preferably 1°C/sec or lower. The heating rate in the final heating step is preferably 0.1°C/sec or higher, more preferably 0.2°C/sec or higher.

The difference in temperature between the goal temperature and the final heating start temperature can be 10°C or higher, and is preferably 30°C or higher, more preferably 40°C or higher. When the difference in temperature is too small, the heating time in the final heating step (final heating time) may be insufficient to achieve a desired alloy state of the Fe-Ni diffusion layer. In particular, when the amount of Ni deposited is 2.5 $g/m^2$ or more, the difference in temperature is preferably 30°C or higher, more preferably 40°C or higher, still more preferably 60°C or higher. When the difference in temperature is 60°C or higher, a desired alloy state on the surface can be achieved and a Ni-plated steel sheet having higher electrolyte solution resistance during overdischarge can be steadily produced. The upper limit of the difference in temperature is preferably 150°C or lower, more preferably 120°C or lower, still more preferably 100°C or lower. The final heating rate is preferably 4°C/sec or lower in the present embodiment. Thus, if the difference in temperature is too large, the time in the high temperature range becomes too long. As a result, the Fe indexing proportion becomes too large, and a desired alloy state on the surface may not be achieved.

In the cooling step, the plated steel sheet heated to the goal temperature is cooled to 120°C or lower. The cooling rate is not particularly limited. To suppress generation of bad shapes or wrinkles, the cooling rate is preferably 1°C/sec to 20°C/sec, more preferably 1°C/sec to 10°C/sec.

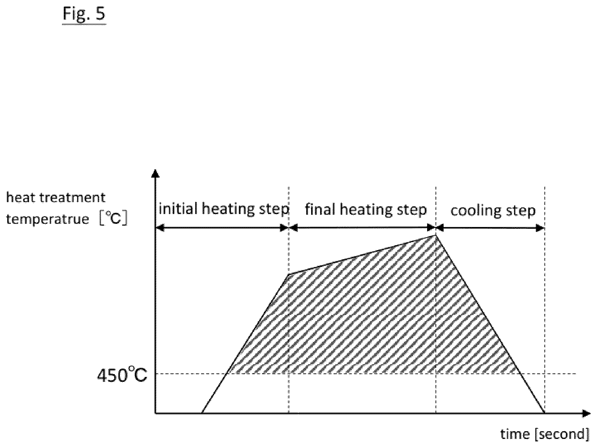

Fig. 5 is an example of a temperature profile of the plated steel sheet for describing a method of calculating a thermal history Y in the thermal diffusion treatment.

To improve the electrolyte solution resistance during overdischarge of the Ni-plated steel sheet, in the thermal diffusion treatment, the thermal history Y of the plated steel sheet from the initial heating step through the final heating step to the cooling step is preferably 150,000°C·sec or less, more preferably 120,000°C·sec or less, still more preferably 100,000°C·sec or less. To conduct sufficient thermal diffusion of Fe and Ni to achieve a desired alloy state, the thermal history Y is preferably 15,000°C·sec or more, more preferably 35,000°C·sec or more, still more preferably 45,000°C·sec or more. When the thermal history Y is within the above ranges, the thickness of the Fe-Ni diffusion layer can also be within a preferred range. The thermal history Y can be determined by integrating the amount of change in the heating temperature and the cooling temperature with respect to time in the region of 450°C or higher. In other words, the hatched area in Fig. 5 corresponds to the thermal history Y in the thermal diffusion treatment. The thermal history Y of the plated steel sheet can be controlled to fall within the above ranges by properly controlling the heating rate in the region of 450°C or higher (including the maximum heating rate), the heating start temperature, the goal temperature, and the cooling rate in the cooling step in the initial heating step and the final heating step.

If the thermal history Y in the thermal diffusion treatment is too large, the Fe indexing proportion tends to increase and the electrolyte solution resistance during overdischarge tends to reduce. On the other hand, if the thermal history Y in the thermal diffusion treatment is too small, the average crystal grain size on the topmost surface of the Ni-plated steel sheet becomes too small and the electrolyte solution resistance during overdischarge may reduce.

The value of W/Y (ratio of the amount W of Ni deposited ($g/m^2$) to the thermal history Y) $\times 10^5$ is preferably 1.0 or more. When the value of W/Y $\times 10^5$ is less than 1.0, a desired alloy state on the surface cannot be achieved, for example, the Fe indexing proportion becomes too large, which may result in reduced electrolyte solution resistance during overdischarge. On the other hand, the value of W/Y (ratio of the amount of Ni deposited W ($g/m^2$) to the thermal history Y) $\times 10^5$ is preferably 20.0 or less, more preferably 10.0 or less, still more preferably 7.0 or less. When W/Y $\times 10^5$ exceeds 20.0, the average crystal grain size and the Fe indexing proportion, which can be determined by EBSD measurement, on the topmost surface of the Ni-plated steel sheet may not be controlled within appropriate ranges.

As described above, the present inventors have found that by controlling the amount of Ni deposited W on the steel sheet within the above ranges and performing the thermal diffusion treatment on the Ni-plated steel sheet under the above conditions, an Fe-Ni diffusion layer in which interdiffusion of Ni in the Ni-plating layer and Fe in the steel sheet occurs, and the state of the crystal on the topmost surface is properly controlled such that the average crystal grain size is 0.32 μm or more and the Fe indexing proportion is 0.0% or more and 6.0% or less can be formed. The Ni-plated steel sheet produced by the above method has high electrolyte solution resistance during overdischarge due to the properly controlled average crystal grain size and Fe indexing proportion.

Conventionally, commonly used methods for increasing the average crystal grain size on the topmost surface of the Fe-Ni plating layer or the Ni-plating layer for the purpose of preventing formation of paths that cause corrosion and improving the electrolyte solution resistance include elevating the temperature in the thermal diffusion treatment or increasing the thermal history. On the other hand, the present inventors, who have conducted extensive study, have newly found that when the heat treatment temperature is too high or the thermal history is too large, the Fe indexing proportion on the topmost surface may increase and a larger amount of Fe may be eluted into the electrolyte solution, and the average crystal grain size on the topmost surface may be smaller. Although the reason why the average crystal grain size is reduced when the heat treatment temperature is too high, the thermal history is too large, or the value of W/Y is lower than the lower limit is uncertain, it is considered that excessive diffusion of Fe prevents the growth of crystal grains. Even under the same heat treatment conditions, the Fe indexing proportion varies depending on the thickness of the Ni-plating layer (amount of Ni deposited). Thus, the present inventors have found that controlling not only the average crystal grain size on the topmost surface of the Ni-plated steel sheet but also the Fe indexing proportion is required to improve the electrolyte solution resistance of the Ni-plated steel sheet, and have further found the amount of Ni plating deposited and the conditions for the thermal diffusion treatment required to properly control them.

Although the reason why the average crystal grain size and the Fe indexing proportion on the topmost surface of the Ni-plated steel sheet can be controlled within the above ranges by heating under the conditions as described above is not uncertain, it is considered that by controlling the thermal history Y in the temperature region of 450°C or higher within appropriate ranges with respect to the amount W of Ni deposited, diffusion of Fe to the topmost surface can be prevented and an increase in the Fe indexing proportion can be suppressed. It is further considered that when the heating around the maximum temperature, that is, the heating of the plated steel sheet in the final heating step is continued at a relatively slow heating rate, a rapid change in the crystal structure can be prevented to allow homogeneous diffusion, and as a result, the Fe indexing proportion can be reduced and the average crystal grain size on the topmost surface can be controlled within an appropriate range.

In addition, conventionally known methods for improving the electrolyte solution resistance of the Ni-plated steel sheet include a method of controlling the Fe proportion on the topmost surface, which can be determined by GDS. On the other hand, the present inventors have found that simply controlling the proportion (% by mass) of the Fe atom present on the topmost surface, such as the Fe proportion which can be determined by GDS, is not sufficient to improve the electrolyte solution resistance during overdischarge, and that controlling the Fe indexing proportion as determined by EBSD measurement is more important, and found the appropriate ranges thereof.

In particular, in a conventional standard method of performing a thermal diffusion treatment on the Ni-plated steel sheet, a plated steel sheet is heated, soaked by maintaining the temperature at the maximum temperature for a predetermined time, and cooled. Among the series of steps, the soaking step is a step in which Fe most easily diffuses by interdiffusion and the amount of Fe that rapidly reaches the topmost surface can readily increase. In contrast, in the thermal diffusion treatment method according to the present embodiment, after the initial heating is performed, the temperature does not reach the maximum temperature in the initial heating; then, in the final heating step, heating is continued at a relatively mild heating rate without soaking of maintaining a constant temperature, and the soaking step is not performed. In other words, it is considered that since ease of diffusion changes continuously in the state where interdiffusion of Fe and Ni occurs, a rapid change in the crystal structure can be prevented to allow homogeneous diffusion, and as a result, the Fe indexing proportion can be reduced and the average crystal grain size on the topmost surface can be controlled within an appropriate range, in contrast to the conventional production method of diffusing Fe by maintaining a constant temperature. As a result, compared to the thermal diffusion treatment method in which soaking is performed, the alloy state of the topmost surface of the Fe-Ni diffusion layer can be more appropriately controlled by the thermal diffusion treatment method according to the present embodiment.

As described above, a Ni-plated steel sheet according to the present embodiment is produced.

After the thermal diffusion treatment is performed, the Ni-plated steel sheet may be subjected to temper rolling, if necessary. By temper rolling, mechanical properties can be controlled, the shape can be corrected, and surface roughness can be imparted.

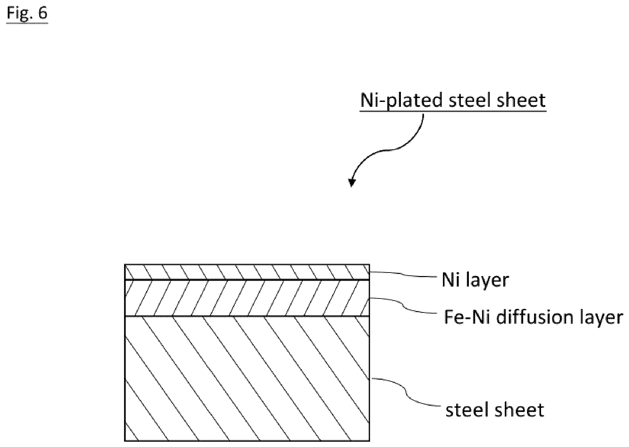

Although the Ni-plated steel sheet shown in Fig. 1 has an Fe-Ni diffusion layer on the topmost surface, the configuration of the Ni-plated steel sheet is not limited thereto as long as the average crystal grain size on the topmost surface of the Ni-plated steel sheet is 0.32 $\mu$m or more and the Fe indexing proportion is 0.0% or more and 6.0% or less, as determined by EBSD measurement. For example, as shown in Fig. 6, the Ni-plated steel sheet may have a Ni layer formed on the Fe-Ni diffusion layer, that is, the topmost surface of the Ni-plated steel sheet may include a Ni layer. Fig. 6 is a schematic view showing a modification of the Ni-plated steel sheet according to the present embodiment. In this case, the amount of Ni deposited on the Ni-plated steel sheet, that is, the total amount of Ni contained in the Fe-Ni diffusion layer and the Ni layer formed thereon is preferably 0.8 to 8.9 g/m$^2$. From the viewpoint of readily forming the Ni layer and controlling the average crystal grain size and the Fe indexing proportion within appropriate ranges, it is more preferably 4.0 to 8.0 g/m$^2$.

Whether the topmost surface of the Ni-plated steel sheet is a Ni layer or not can be determined by the GDS analysis of the Ni-plated steel sheet as described above. When the Fe intensity on the surface of the Ni-plated steel sheet measured in step 2 of the GDS analysis described above is 10% or less of the saturated Fe intensity, it is determined that a Ni-plating layer is formed on the Fe-Ni diffusion layer, that is, the topmost surface of the Ni-plated steel sheet is a Ni layer. When the topmost surface of the Ni-plated steel sheet is determined to be a Ni layer, the thickness determined in the step 5 of the GDS analysis represents the total thickness of the Ni layer and the Fe-Ni diffusion layer.

As shown in Fig. 6, when the topmost surface of the Ni-plated steel sheet includes a Ni layer, it is sufficient that the average crystal grain size on the surface of the Ni layer and the Fe indexing proportion, as determined by EBSD measurement, are controlled within the above ranges. The Fe indexing proportion which can be determined by EBSD measurement is 0.0% or more and 6.0% or less, preferably 0.0% or more and 1.0% or less. The Ni-plated steel sheet according to the modification can be produced by properly controlling the conditions for the Ni plating and the thermal diffusion treatment.

The reason why the electrolyte solution resistance during overdischarge can be improved by controlling the average crystal grain size and the Fe indexing proportion on the surface of the Ni layer in the Ni-plated steel sheet according to the modification is as follows. When the total amount of nickel deposited is relatively small, that is, 0.8 to 8.9 g/m$^2$, and an Fe-Ni diffusion layer and a Ni layer formed thereon are formed, the Ni layer on the topmost surface is relatively thin. When the Ni layer is thin, it is considered that even if the amount of Fe is lower than the detection limit in a broad area on which GDS measurement is performed, Fe may reach locally near the topmost surface (in particular, around boundaries of crystal grains) and exert an influence on the electrolyte solution resistance during overdischarge. Furthermore, it is considered that since the Ni layer is relatively thin, the state of the Ni layer, that is, the average crystal grain size, the crystal structure, or the like is strongly influenced by the conditions for forming the underlying Fe-Ni diffusion layer. Thus, it is assumed that by controlling the average crystal grain size and the Fe indexing proportion, as determined by EBSD measurement, in the same manner as in the embodiment of the Fe-Ni diffusion layer on the topmost surface as described above, favorable electrolyte solution resistance during overdischarge can be achieved.

When the Ni-plated steel sheet according to the modification is used in a battery container in the form of a can, preferably, the Fe-Ni diffusion layer is formed on the surface which will form the inner surface of the battery container, and the Ni layer having a controlled average crystal grain size and a controlled Fe indexing proportion is formed as the topmost surface on the Fe-Ni diffusion layer, and the Fe-Ni diffusion layer is formed on the surface which will form the outer surface of the battery container and a Ni layer is formed on the Fe-Ni diffusion layer. In this case, the total amount of Ni deposited contained in the Fe-Ni diffusion layer and the Ni layer on the surface which will form the outer surface of the battery container is preferably 9.0 to 90 g/m$^2$.

<Battery container>

The battery container according to the present embodiment is obtained by forming and processing the surface-treated steel sheet such that a surface thereof on which the Fe-Ni diffusion layer is formed faces the inside of the battery container. Specifically, the battery container according to the present embodiment can be obtained by forming the surface-treated steel sheet into a shape of a battery container by drawing, ironing, DI (Drawing and Ironing), or DTR (Draw and Thin Redraw).

A battery container produced by forming the Ni-plated steel sheet according to the present embodiment has appropriately controlled average crystal grain size and proportion of the region which can be indexed as Fe on the topmost surface of a surface which comes into contact with an electrolyte solution, and thus has high electrolyte solution resistance during overdischarge and can prevent corrosion caused by elution of iron.

EXAMPLES

Hereinafter, the present invention will be more specifically described by way of Examples, but the present invention is not limited to these Examples.

Properties were evaluated by the following methods.

<Amount of Ni deposited, thickness of Ni-plating layer>

The plated steel sheet including a Ni-plating layer formed in each of Examples and Comparative Examples was measured with an X-ray fluorescence analyzer to determine the amount of Ni deposited per one surface of the Ni-plated steel sheet. The X-ray fluorescence analyzer used was ZSX100e (available from Rigaku Corporation), and a calibration curve method was used for the measurement. The thickness of the Ni-plating layer was determined by calculating the thickness from the amount of Ni deposited using the density of Ni (8.9 g/cm$^3$).

<Thickness of Fe-Ni diffusion layer and proportion of Fe by GDS>

Using a radio frequency glow discharge optical emission spectrometer (available from HORIBA, Ltd., Model No.: GD-PROFILER 2), the Fe proportion by GDS (hereinafter, also referred to as proportion of Fe) was determined. The proportion of Fe can be determined according to the procedure described in Measurement steps 1 to 6 above. In Examples 1 to 8 and Comparative Example 3, the thickness of the Fe-Ni diffusion layer by GDS was also determined according to the procedure described in Measurement steps 1 to 5 above. Specific measurement conditions for the radio frequency glow discharge optical emission spectrometer are shown below.

- · measurement mode: HDD mode
- · excitation mode: RF (normal)
- · output: 35 W
- · pressure: 600 Pa
- · module: 7 V
- · phase: 7 V
- · anode diameter: 4 mm
- · gas replace time: 30 seconds
- · preparative sputtering time: 30 seconds
- · background measurement time: 10 seconds
- · measurement time: 80 seconds
- · acquisition interval: 0.1 seconds

When the proportion of Fe determined by the GDS analysis exceeds 10%, it was determined that Fe reached the topmost surface, and the Fe-Ni diffusion layer was formed on the topmost surface. On the other hand, when the proportion of Fe was 10% or less, it was determined that Fe did not reach the topmost surface, and the topmost surface was a Ni layer.

<Average crystal grain size on topmost surface of Ni-plated steel sheet>

Using a scanning electron microscope (SEM) (model: SU8020, available from Hitachi High-Tech Corporation), the surface of the Ni-plated steel sheet was irradiated with electron beams to obtain an EBSD pattern, the EBSD pattern was detected with an EBSD detector, and indexing was performed using an OIM (Orientation Imaging Microscopy) crystal orientation analyzer (available from TSL solutions) and analysis software (OIM Data Collection version 6.2.1). The number of measurement areas of EBSD is 3.

(SEM measurement conditions)

- · acceleration voltage: 20 kV
- · emission current: 20 $\mu$A
- · WD: 20 mm
- · measurement magnification: 7000 times

(EBSD measurement conditions)

- · measurement area: 7 $\mu$m $\times$ 7 $\mu$m
- · step: 0.05 $\mu$m
- · material data: Fe($\alpha$) and Ni

(EBSD analysis conditions)

- · grain tolerance: 5
- · minimum grain: 2

In each of the different measurement areas, indexing was performed by EBSD measurement with the conditions above using two pieces of material data, that is, material data of Fe($\alpha$) and material data of Ni, to obtain mapping data including phase and orientation information about Fe($\alpha$) and Ni. The resulting mapping data was analyzed using analysis software (OIM Analysis Version 7.3) and the analysis conditions above to give the proportion of the region which can be indexed as Fe and the average crystal grain size in each of the different measurement areas. In the analysis, clean-up processing (Grain CI standardization) was performed using analysis software, and evaluation was made using data points measured which had a confidence index (CI value) of higher than 0.1. Using all of the pieces of data of Fe and Ni after the clean-up processing above, the crystal grain size distribution was obtained based on the grain size (diameter) that includes information about the crystal grain size as a diameter of a circle having the same area as that of each crystal grain, and the average crystal grain size was determined using the number method. The average of the average crystal grain sizes determined for the different measurement areas was calculated.

<Fe indexing proportion on topmost surface of Ni-plated steel sheet>

A phase map by Fe and Ni was produced from the data obtained from the EBSD measurement and analysis above. The total area of the regions which can be indexed as Fe or Ni (where the regions eliminated by the clean-up processing above and those eliminated by setting of the lower limit of the CI value in the data were not included) was defined as 100%, and the proportion of the area of the region which can be indexed as Fe to this total area was calculated as a Fe indexing proportion. The average of the Fe indexing proportion determined for the different measurement areas was calculated.

<Evaluation on electrolyte solution resistance during overdischarge>

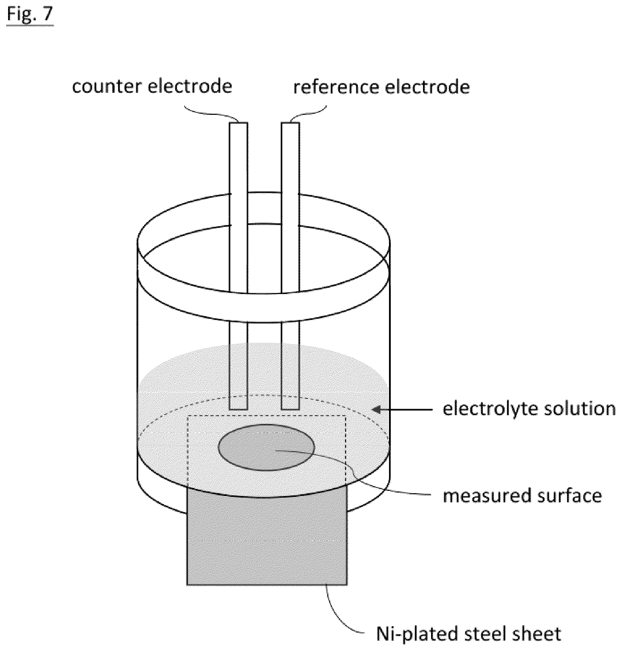

In Ni-plated steel sheets, the electrolyte solution resistance during overdischarge was evaluated by Linear Sweep Voltammetry (LSV) using a multi electrochemical measurement system HZ-Pro (Model No.: HAG-PROM12, available from Hokuto Denko Corp.). The measurement was performed using the measurement jig shown in Fig. 7. Fig. 7 is a schematic view of a measurement jig used in evaluation of the electrolyte solution resistance of the Ni-plated steel sheet by the LSV method. As shown in Fig. 7, a Ni-plated steel sheet was attached to the bottom of the measurement jig, an electrolyte solution (1 mol/L $LiPF_6$, EC: DEC (1:1 v/v%), available from KISHIDA CHEMICAL Co., Ltd.) was added to the jig, and metal lithium (available from Honjo Metal Co., Ltd.) as a counter electrode and a reference electrode was attached to jig upper electrodes. The surface area of the measured surface was 1.04 $cm^2$, and the surface area of the counter electrode and that of the reference electrode were 1.2 $cm^2$. The distance between the reference electrode and the working electrode was 2 mm, the distance between the counter electrode and the working electrode was 2 mm, and the distance between the counter electrode and the reference electrode was 12 mm. The measurement was performed in a dry room at a dew point of - 40°C or lower and room temperature of 25°C. Polarization was caused from the natural potential to +4.1 V (vsLi/Li+) at a scanning rate of 2 mV/sec which corresponded to overdischarge, the current density ($nA/cm^2$) at 4.1 V was measured, and the electrolyte solution resistance during overdischarge of the Ni-plated steel sheet was evaluated. A smaller current density indicates less elution of Fe and higher electrolyte solution resistance during overdischarge.

<<Example 1>>

As a substrate, a cold-rolled steel sheet of low carbon aluminum-killed steel having a thickness of 0.3 mm was prepared.

Then, the prepared steel sheet was subjected to alkaline electrolytic degreasing and pickling by immersion in sulfuric acid, and electroplating (Ni plating) was performed under the following conditions using a Ni plating bath having the following bath composition to form a Ni-plating layer on the surface of the steel sheet, the Ni-plating layer having an amount W of Ni deposited of 0.87 $g/m^2$.

<Conditions for Ni plating>

Bath composition: 250 g/L of nickel sulfate·hexahydrate, 45 g/L of nickel chloride ·hexahydrate, 30 g/L of boric acid
pH: 4.0 to 5.0
bath temperature: 60°C
current density: 10 $A/dm^2$

Next, the steel sheet on which the Ni-plating layer was formed (plated steel sheet) was subjected to a thermal diffusion treatment by continuous annealing under a reducing protective gas atmosphere to form an Fe-Ni diffusion layer, and further subjected to temper rolling at a draft of 3% or less after the thermal diffusion treatment to give a Ni-plated steel sheet. In the continuous annealing, in the initial heating step, the plated steel sheet was heated from ambient temperature to the final heating start temperature. The final heating start temperature was selected within a temperature range of 660 to 694°C. The maximum heating rate in the initial heating step (maximum heating rate) was 4.96°C/sec. Subsequently, in the final heating step, the goal temperature was set within a temperature range of 695 to 729°C such that the difference between the final heating start temperature and the final heating goal temperature (difference in temperature in the final heating step) was 40°C, and the plated steel sheet was heated at a heating rate of 0.37°C/sec. Then, in the cooling step, the plated steel sheet was cooled to 120°C or lower by blowing a cooling gas such as HNX gas. The thermal history Y of the Ni-plated steel sheet from the initial heating step through the final heating step to the cooling step was 57920°C·sec.

The resulting Ni-plated steel sheet was evaluated for various properties according to the above-mentioned methods. The results are shown in Tables 1 and 2.

<<Examples 2 to 8, and Comparative Examples 1 to 5>>

Ni-plated steel sheets were obtained under the conditions where the type of substrate, the amount of Ni plating deposited, the thermal history Y in the thermal diffusion treatment, and the heat treatment conditions (i.e., the maximum heating rate, the final heating start temperature, the heating rate in the final heating step, the final heating goal temperature, the difference in temperature in the final heating step, and the final heating time) were varied as shown in Table 1, and were evaluated likewise. The results are shown in Tables 1 and 2.

[Table 1]

Table 1

| | | Substrate | Amount W of Ni deposited | Heat treatment conditions | | | | | | | | Thermal history Y | W/Y ×10^5 | Layer of topmost surface | Fe-Ni diffusion layer | | | Evaluation |
|---|---|---|---|---|---|---|---|---|---|---|---|---|---|---|---|---|---|---|
| | | | | Initial heating step | Final heating step | | | | | | | | | | EBSD | | GDS | LSV measurement |
| | | | | Maximum heating rate | Start temperature | Heating rate | Goal temperature | Difference in temperature | Time | | | | | | Proportion of Fe-indexing | Average crystal grain size | Fe proportion | Current density at 4.1 V |
| | | | (g/m²) | (°C/sec) | (°C) | (°C/sec) | (°C) | (°C) | (sec) | | | (°C·sec) | (-) | | (%) | (μm) | (% by mass) | (nA/cm²) |
| Example | 1 | Low carbon aluminum-killed steel | 0.87 | 4.96 | 660-694 | 0.37 | 695-729 | 40 | 107.0 | | | 57,920 | 1.50 | Fe-Ni diffusion layer | 0.33 | 0.37 | 71.9 | 311 |
| | 2 | Low carbon aluminum-killed steel | 4.11 | 4.93 | 695-729 | 0.82 | 800-834 | 94 | 115.0 | | | 91,355 | 4.50 | Fe-Ni diffusion layer | 0.10 | 0.68 | 47.9 | 162 |
| | 3 | Low carbon aluminum-killed steel | 4.27 | 5.63 | 695-729 | 0.93 | 800-834 | 84 | 90.0 | | | 74,779 | 5.71 | Fe-Ni diffusion layer | 0.13 | 0.76 | 47.1 | 259 |
| | 4 | Ultra-low carbon steel | 2.6 | 4.93 | 695-729 | 0.82 | 800-834 | 94 | 115.0 | | | 91,355 | 2.85 | Fe-Ni diffusion layer | 0.10 | 0.66 | 58.4 | 236 |
| | 5 | Low carbon aluminum-killed steel | 4.49 | 6.27 | 800-834 | 0.50 | 835-869 | 48 | 96.0 | | | 99,831 | 4.50 | Fe-Ni diffusion layer | 0.07 | 0.83 | 54.7 | 504 |
| | 6 | Low carbon aluminum-killed steel | 2.67 | 6.67 | 835-869 | 0.60 | 870-904 | 54 | 90.0 | | | 114,690 | 2.33 | Fe-Ni diffusion layer | 0.13 | 1.06 | 68.3 | 952 |
| | 7 | Low carbon aluminum-killed steel | 0.9 | 9.41 | 660-694 | 2.02 | 765-799 | 95 | 47.0 | | | 30,129 | 2.99 | Fe-Ni diffusion layer | 1.43 | 0.35 | 65.7 | 1,005 |
| | 8 | Low carbon aluminum-killed steel | 0.95 | 5.63 | 695-729 | 0.93 | 800-834 | 84 | 90.0 | | | 74,779 | 1.27 | Fe-Ni diffusion layer | 3.77 | 0.34 | 69.6 | 1,049 |
| Comp. Ex. | 1 | Low carbon aluminum-killed steel | 0.91 | 7.50 | 520-554 | 1.14 | 590-624 | 50 | 44.0 | | | 10,299 | 8.84 | Fe-Ni diffusion layer | 0.33 | 0.28 | 40.3 | 2,279 |
| | 2 | Low carbon aluminum-killed steel | 0.89 | 6.27 | 800-834 | 0.53 | 835-869 | 50 | 93.8 | | | 100,475 | 0.89 | Fe-Ni diffusion layer | 86.10 | 0.32 | 76.8 | 100,977 |
| | 3 | Low carbon aluminum-killed steel | 0.89 | 6.67 | 835-869 | 0.53 | 870-904 | 50 | 93.8 | | | 115,867 | 0.77 | Fe-Ni diffusion layer | 98.00 | 0.32 | 75.1 | 312,795 |
| | 4 | Low carbon aluminum-killed steel | 0.93 | 34.20 | 800-834 | 0.00 | 800-834 | 0 | 20.0 | | | 14,191 | 6.55 | Fe-Ni diffusion layer | 6.20 | 0.38 | 59.2 | 51,999 |
| | 5 | Low carbon aluminum-killed steel | 0.86 | 42.50 | 835-869 | 0.00 | 835-869 | 0 | 20.0 | | | 15,516 | 5.54 | Fe-Ni diffusion layer | 17.83 | 0.35 | 69.9 | 60,930 |

[Table 2]

Table 2

| | | Fe-Ni diffusion layer |
|---|---|---|
| | | GDS |
| | | Thickness of Fe-Ni diffusion layer |
| | | ($\mu$m) |
| Example | 1 | 0.65 |
| | 2 | 1.85 |
| | 3 | 1.74 |
| | 4 | 1.10 |
| | 5 | 1.69 |
| | 6 | 1.33 |
| | 7 | 0.54 |
| | 8 | 0.40 |
| Comp. Ex. | 3 | 1.00 |

As shown in Table 1, in the Ni-plated steel sheet in which the average crystal grain size was 0.32 $\mu$m or more and the proportion of the region which can be indexed as Fe was 0.0% or more and 6.0% or less as determined by EBSD measurement, the current density attributed to elution of Fe at 4.1 V corresponding to overdischarge was small, and the electrolyte solution resistance during overdischarge was excellent (Examples 1 to 8).

Furthermore, in the Ni-plated steel sheet in which the average crystal grain size was 0.36 $\mu$m or more and the proportion of the region which can be indexed as Fe was 0.0% or more and 1.0% or less as determined by EBSD measurement, the current density attributed to elution of Fe at 4.1 V corresponding to overdischarge was smaller, and the electrolyte solution resistance during overdischarge was particularly excellent (Examples 1 to 6).

In contrast, in the Ni-plated steel sheet of Comparative Example 1 in which the thermal history Y was small and the average crystal grain size was smaller than 0.32 $\mu$m, the electrolyte solution resistance during overdischarge was poor. In addition, in the Ni-plated steel sheets of Comparative Examples 2 and 3 in which the value of W/Y in the thermal diffusion treatment was small and the Fe indexing proportion was more than 6.0%, and in the Ni-plated steel sheets of Comparative Examples 4 and 5 in which the maximum heating rate was large, and soaking was performed without final heating and thus the Fe indexing proportion was more than 6.0%, the electrolyte solution resistance during overdischarge was poor.

**Claims**

1. A Ni-plated steel sheet comprising:

   a steel sheet; and
   an Fe-Ni diffusion layer formed on at least one surface of the steel sheet,
   wherein as determined by EBSD measurement performed on the topmost surface of the Ni-plated steel sheet, the average crystal grain size is 0.32 $\mu$m or more, and the proportion of the region which can be indexed as Fe is 0.0% or more and 6.0% or less.

2. The Ni-plated steel sheet according to claim 1, wherein the amount of Ni deposited per one surface of the Ni-plated steel sheet is 0.8 to 8.9 g/m$^2$.

3. The Ni-plated steel sheet according to claim 1 or 2, comprising a Ni layer formed on the Fe-Ni diffusion layer, wherein as determined by EBSD measurement performed on the topmost surface of the Ni-plated steel sheet, the proportion of the region which can be indexed as Fe is 0.0% or more and 1.0% or less.

**4.** The Ni-plated steel sheet according to any one of claims 1 to 3, wherein the steel sheet has a thickness of 0.03 to 1.5 mm.

**5.** The Ni-plated steel sheet according to any one of claims 1 to 4, wherein the steel sheet is low carbon steel or ultra-low carbon steel.

**6.** A battery container produced using the Ni-plated steel sheet according to any one of claims 1 to 5.

Fig. 1

Ni-plated steel sheet

Fe-Ni diffusion layer

steel sheet

Fig. 2

Fig. 3

Fig. 4

Fig. 5

Fig. 6

Ni-plated steel sheet

Ni layer

Fe-Ni diffusion layer

steel sheet

Fig. 7

counter electrode

reference electrode

electrolyte solution

measured surface

Ni-plated steel sheet

## INTERNATIONAL SEARCH REPORT

| International application No. |
|---|
| **PCT/JP2023/038958** |

| A. | CLASSIFICATION OF SUBJECT MATTER |
|---|---|

*C25D 5/50*(2006.01)i; *C25D 3/12*(2006.01)i; *C25D 5/26*(2006.01)i; *C25D 7/00*(2006.01)i; *H01M 50/119*(2021.01)i; *H01M 50/124*(2021.01)i; *H01M 50/133*(2021.01)i
FI: C25D5/50; C25D5/26 A; C25D3/12; C25D7/00 G; H01M50/119; H01M50/124; H01M50/133

According to International Patent Classification (IPC) or to both national classification and IPC

| B. | FIELDS SEARCHED |
|---|---|

Minimum documentation searched (classification system followed by classification symbols)

C25D5/50; C25D3/12; C25D5/26; C25D7/00; H01M50/119; H01M50/124; H01M50/133

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2020/137887 A1 (NIPPON STEEL CORPORATION) 02 July 2020 (2020-07-02) claims, paragraphs [0025], [0032]-[0035], [0047]-[0063], fig. 3 | 1, 3-6 |
| A | | 2 |
| A | WO 2017/094919 A1 (TOYO KOHAN CO., LTD.) 08 June 2017 (2017-06-08) claims, paragraphs [0059]-[0106] | 1-6 |
| A | SANATY-ZADEH, A., et al. Properties of nanocrystalline iron-nickel alloys fabricated by galvano-static electrodeposition. Journal of Alloys and Compounds. 30 May 2009, vol. 485, pp. 402-407 p. 403, right column, line 5 to p. 404, left column, line 25, fig. 2, 3 | 1-6 |

☐ Further documents are listed in the continuation of Box C. ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **27 December 2023** | **16 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/038958**

| Patent document cited in search report | | | Publication date (day/month/year) | Patent family member(s) | | | Publication date (day/month/year) |
|---|---|---|---|---|---|---|---|
| WO | 2020/137887 | A1 | 02 July 2020 | US | 2022/0033988 | A1 | |
| | | | | claims, paragraphs [0047], [0054]-[0058], [0077]-[0106], fig. 3 | | | |
| | | | | EP | 3904566 | A1 | |
| | | | | CN | 113195795 | A | |
| | | | | KR | 10-2021-0092271 | A | |
| WO | 2017/094919 | A1 | 08 June 2017 | US | 2018/0351138 | A1 | |
| | | | | claims, paragraphs [0092]-[0167] | | | |
| | | | | US | 2022/0166092 | A1 | |
| | | | | EP | 3385410 | A1 | |
| | | | | CN | 108368629 | A | |
| | | | | KR | 10-2018-0087388 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014047359 A